# EUROPÄISCHE PATENTSCHRIFT

(11) **EP 1 947 156 B1**
(45) Veröffentlichungstag und Bekanntmachung des Hinweises auf die Patenterteilung: **09.12.2009**
(21) Anmeldenummer: 08405001.2
(22) Anmeldetag: 04.01.2008
(51) Int. Cl.: C09J 5/06, B29C 65/14, F16B 11/00

(54) **System und Verfahren zum Verbinden von nichttransparenten Teilen mittels eines durch Bestrahlung aushärtbaren Klebstoffs**
System and method for connecting opaque components with an adhesive hardened through irradiation
Système et procédé de liaison de pièces non transparentes à l'aide d'une colle durcissable par rayonnement

(30) Priorität: 22.01.2007 CH 882007
(43) Veröffentlichungstag der Anmeldung: 23.07.2008
(73) Patentinhaber: Erowa AG, 5734 Reinach (CH)
(72) Erfinder: Sandmeier, Bruno, 5708 Birrwil (CH)
(74) Vertreter: Rottmann, Maximilian

(56) Entgegenhaltungen:
- WO-A-01/83184
- WO-A-97/42419
- WO-A-02/092329
- GB-A- 2 086 263
- JP-A- 2001 054 945
- JP-A- 2001 334 578
- US-A- 6 007 663
- US-A1- 2005 087 290

## Beschreibung

Die Erfindung betrifft ein System zum Verbinden von nichttransparenten Teilen mittels eines durch elektromagnetische Bestrahlung aushärtbaren Klebstoffs gemäss dem Oberbegriff des Anspruchs 1 sowie ein Verfahren zum Verbinden von nichttransparenten Teilen mittels eines durch Bestrahlung aushärtbaren Klebstoffs gemäss dem Oberbegriff des Anspruchs 16.

Wenn Teile mittels eines durch elektromagnetische Bestrahlung aushärtbaren Klebstoffes flächig miteinander verbunden werden sollen, so muss zumindest eines der beiden Teile für die die Aushärtung initiierende Strahlung transparent sein, damit der Klebstoff durch Bestrahlung aktiviert und ausgehärtet werden kann.

Aus der DE 10 2005 002 076 A1 ist ein Verfahren zur Herstellung eines Glasscheiben-Metallrahmen-Bauelements bekannt, bei welchem eine Glasscheibe mittels eines UV-aushärtbaren Klebstoffs mit einem Rahmenelement verbunden wird. Zwischen der Glasscheibe und dem Rahmenelement ist ein keilförmiger Spalt vorhanden, welcher unter Ausnutzung der Kapillarwirkung mit dem Klebstoff ausgefüllt wird. Nach dem Ausfüllen dieses Spalts wird der Klebstoff mittels UV-Bestrahlung ausgehärtet.

Die Erfindung zielt darauf ab, ein System und ein Verfahren zum Verbinden von nichttransparenten Teilen mittels eines durch elektromagnetische Bestrahlung aushärtbaren Klebstoffs vorzuschlagen, wobei ein schnelles Aushärten des Klebstoffs durch Bestrahlung ermöglicht werden soll, auch wenn dieser flächig zwischen den nichttransparenten Teilen aufgebracht wird.

Hierzu wird nach der Erfindung ein System gemäss dem Anspruch 1 sowie ein Verfahren gemäss dem Anspruch 16 bereitgestellt.

Der grundsätzliche Erfindungsgedanke besteht darin, ein zumindest teilweise transparentes Element zwischen die miteinander zu verbindenden, nichttransparenten Teile einzufügen, mittels welchem die die Aushärtung des Klebstoffs initiierende Strahlung in eine zwischen den nichttransparenten Teilen flächig aufgebrachte Klebstoffschicht eingeleitet werden kann, so dass diese im Bedarfsfall schnell aushärtet. Das zumindest teilweise transparente Element kann dabei sowohl als Verbindungsteil ausgebildet sein, indem es als eine Art Verbindungsstück zwischen die miteinander zu verbindenden Teile eingefügt und beidseitig mit je einem Teil verklebt wird. In diesem Fall muss ein solches Element die vom einen auf das andere Teil ggf. zu übertragenden Kräfte aufnehmen können. Alternativ dazu kann das zumindest teilweise transparente Element auch nur als eine Art Strahlungsverteiler ausgebildet sein, mittels welchem die die Aushärtung des Klebstoffs initiierende Strahlung an die gewünschten Stellen oder Bereiche geleitet wird. Das System eignet sich insbesondere dazu, um nichttransparente Teile nach dem positionsgenauen Ausrichten schnell und dauerhaft mittels des genannten Klebstoffs zu verbinden.

Ein Ausführungsbeispiel der Erfindung wird nachfolgend anhand von Zeichnungen näher erläutert. Dabei zeigt:
- Fig. 1: Einzelteile des Systems zum Verbinden zweier nichttransparenter Teile in perspektivischer Ansicht ;
- Fig. 2: einige Einzelteile des Systems in vergrösserter Darstellung, und
- Fig. 3: einen Längsschnitt durch zwei Einzelteile des Systems.

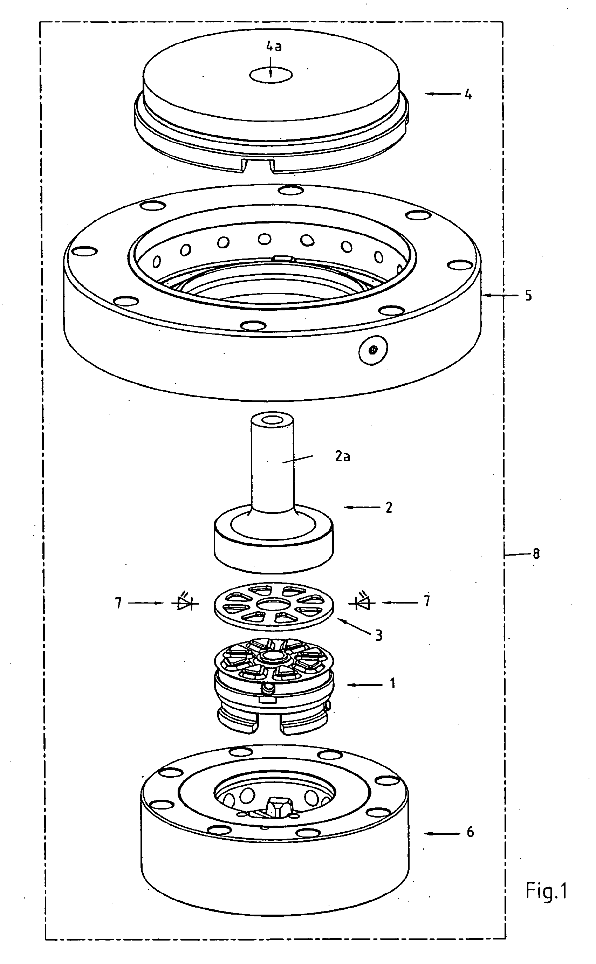

Die Fig. 1 zeigt einige Einzelteile des Systems zum Verbinden zweier nichttransparenter Teile. Im vorliegenden Beispiel bestehen die miteinander zu verbindenden Teile aus einer Palette 1 und einem Stempel 2, welche beide aus Metall gefertigt und damit für sichtbares oder ultraviolettes Licht nicht transparent sind. Ein wesentlicher Bestandteil des Systems ist ein transparentes Element 3 in Form einer runden Scheibe. Dieses Element 3 weist zwei planparallele Oberflächen und wird als Verbindungselement zwischen die beiden miteinander zu verbindenden Teile 1, 2 eingefügt. Weitere Bestandteile des Systems sind ein Zentrierelement 4 zum Ausrichten des Stempels 2 gegenüber der Palette 1 sowie eine Bestrahlungsquelle 7, welche Licht in einem auf einen photoinitiiert aushärtenden Klebstoff abgestimmten Wellenlängenbereich, beispielsweise ultraviolettes Licht, emittiert. Die hier nur schematisch durch zwei Leuchtdioden dargestellte Bestrahlungsquelle 7 dient dem initiieren der Aushärtung einer Klebstoffschicht, welche zum Verbinden der einzelnen Teile 1, 2, 3 an den dazu vorgesehenen Stellen aufgetragen wird. Die Bestrahlungsquelle 7 ist vorzugsweise derart ausgebildet, dass die emittierte elektromagnetische Strahlung auf mehrere Stellen verteilt in das Element 3 eingekoppelt wird. Beispielsweise kann die Bestrahlungsquelle 7 eine Vielzahl von Leuchtdioden umfassen, welche vorzugsweise kreisringförmig verteilt angeordnet sind, so dass die Strahlung möglichst gleichmässig entlang des Umfangs in das Element 3 eingekoppelt wird. Als Klebstoff kommt vorzugsweise ein photoinitiiert härtender Acrylatkleber zum Einsatz, der durch Bestrahlung mit UVA-Licht oder sichtbarem Licht in einigen Sekunden bis zur Endfestigkeit aushärtet.

Im weiteren sind ein oberes sowie ein unteres Spannfutter 5, 6 ersichtlich. Das obere Spannfutter 5 dient dem positionsgenauen Fixieren des als Matrize ausgebildeten Zentrierelements 4, während das untere Spannfutter 6 zum positionsgenauen Fixieren der Palette 1 dient. Vorzugsweise sind die beiden Spannfutter 5, 6 derart an einem Gestell, Rahmen oder beispielsweise in einer Presse befestigt, dass zumindest das eine Spannfutter 5 in Relation zum anderen Spannfutter 6 in axialer Richtung bewegbar ist. Im vorliegenden Beispiel ist das obere Spannfutter 5 in Relation zum unteren Spannfutter 6 axial beweglich angeordnet, wobei die dazu notwendigen Mittel nicht näher dargestellt sind. Lediglich ein dem Abstützen der beiden Spannfutter 5, 6 dienender Rahmen 8 ist schematisch angedeutet.

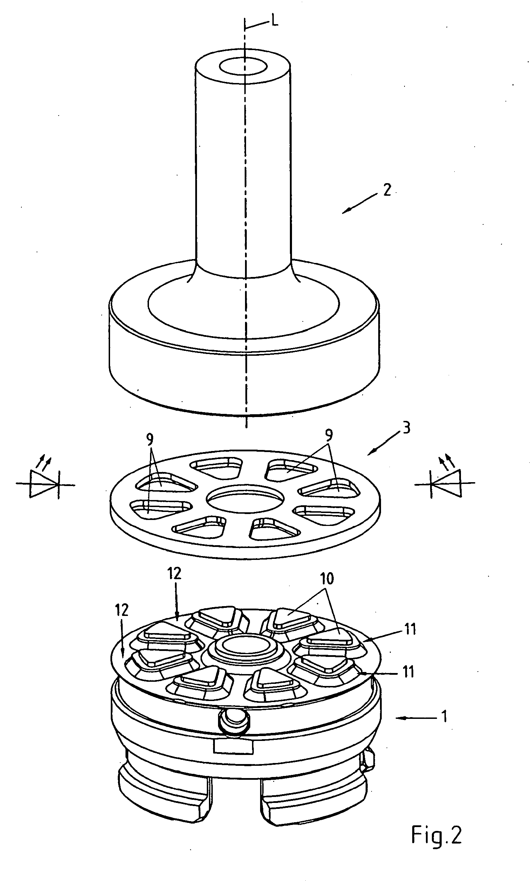

Aus der Fig. 2, welche die Palette 1, den Stempel 2 sowie das transparente Element 3 in vergrösserter Darstellung zeigt, ist ersichtlich, dass das transparente Element 3 mit einer Vielzahl von Durchbrüchen 9 versehen ist, in welche sich an der Palette 1 angebrachte Erhebungen 10 erstrecken können. Die Erhebungen 10 weisen eine plane Oberseite auf, welche zusammen eine Auflagefläche für den Stempel 2 bilden. Jedenfalls sind die Erhebungen 10 etwas höher als das transparente Element 3, so dass sie über das transparente Element 3 vorstehen, wenn dieses an der Palette 1 festgeklebt ist. Zum Befestigen des Stempels 2 an der Palette 1 wird zwischen der Palette 1 und dem transparenten Element 3 und zwischen dem Stempel 2 und dem transparenten Element 3 je eine Klebstoffschicht aufgetragen, was anschliessend noch näher erläutert wird. Die endgültige Dicke dieser Klebstoffschicht wird durch die Differenz zwischen der Höhe der Erhebungen 10 und der Höhe bzw. Dicke des transparenten Elements 3 bestimmt. Um eine optimale Klebstoffschichtdicke erreichen zu können, sind die Erhebungen 10 in etwa um das Doppelte der Dicke der jeweils vorzusehenden Klebstoffschicht höher als das transparente Element 3. Vorzugsweise sind die Erhebungen 10 um ca. 0,1 bis 0,5 mm höher als das transparente Element 3, so dass zwischen der Palette 1 und der planen Unterseite des transparenten Elements 3 und zwischen dem Stempel 2 und der planen Oberseite des transparenten Elements 3 jeweils eine Klebstoffschicht mit einer Dicke in der Grössenordnung von 0,05 bis 0,25 mm aufgebracht bzw. verbleiben kann.

Im weiteren ist ersichtlich, dass am Fuss der jeweiligen Erhebung 10 schräge Flächen 11 angeordnet sind. Diese Flächen 11 dienen im vorliegenden Fall dazu, einen Teil des seitlich in das transparente Element 3 eingeleiteten Lichts nach oben abzulenken, damit die zwischen der Oberseite des transparenten Elements 3 und der Unterseite des Stempels 2 aufgebrachte Klebstoffschicht im Bedarfsfall schnell aushärtet. Anstelle oder zusätzlich zu diesen Ablenkflächen 11 kann auch das transparente Element 3 selber derart ausgebildet sein, dass zumindest ein Teil des seitlich eingekoppelten UV-Lichts umgelenkt oder gestreut wird. Dies kann entweder über die Wahl des Materials erfolgen oder es können Einlagerungen im Material vorgesehen werden, welche ein Umlenken oder Streuen des Lichts bewirken. Als Material kommt beispielsweise PC (Polycarbonat), insbesondere Makrolon^{®} oder PMMA (Polymethylmetacrylat) in Frage.

Um den Stempel 2 an der Palette 1 zu Befestigen, wird vorzugsweise zuerst das transparente Element 3 mit der Palette 1 verbunden. Dazu wird eine Klebstoffschicht auf die Palette 1 aufgebracht, wobei der Klebstoff vorzugsweise nur auf die plane Oberfläche 11 der Palette 1 und/oder die Unterseite des transparenten Elements 3, nicht jedoch auf die Erhebungen 10 aufgetragen wird. Danach wird das transparente Element 3 derart auf die Palette 1 aufgesetzt, dass sich die Erhebungen 10 in die Durchbrüche 9 des transparenten Elements 3 erstrecken. Nun wird der Klebstoff ausgehärtet, indem die Klebstoffschicht über das transparente Element 3 mit dem die Aushärtung initiierenden Licht beaufschlagt wird. Falls der Stempel noch nicht auf die Palette aufgesetzt ist, kann das Licht flächig von oben in das transparente Element 3 eingekoppelt werden.

Das Fixieren des transparenten Elements 3 an der Palette 1 kann an einem beliebigen Ort erfolgen, jedenfalls ohne dass die Palette 1 dazu im Spannfutter eingespannt sein muss. Vor dem Fixieren des Stempels 2 an dem transparenten Element 3 wird jedoch die Palette 1 an dem unteren Spannfutter 6 (Fig. 1) fixiert. Danach wird Klebstoff auf die plane Oberseite des transparenten Elements 3 und/oder auf die Unterseite des Stempels 2 aufgetragen und der Stempel 2 auf das transparente Element 3 aufgesetzt. Da die Erhebungen 10 geringfügig über die Oberseite des transparenten Elements 3 vorstehen, kommt die Unterseite des Stempels 2 nur auf den Erhebungen 10, nicht jedoch auf dem transparenten Element 3 zur Anlage. Dabei wird der Stempel 2 in Bezug auf die Palette 1 in Z-Richtung, d.h. in Richtung der Längsmittenachse L genau positioniert. Vor dem Aushärten des Klebstoffs wird der Stempel 2 in Bezug auf die Palette 1 auch noch in X- und Y-Richtung positionsgenau ausgerichtet. Dazu wird die Matrize 4 nach unten gefahren, so dass der zylindrisch ausgebildete Vorderteil 2a des Stempels 2 in die zentrale Matrizenöffnung 4a (Fig. 1) eindringt und der Stempel 2 dabei in X- und Y-Richtung ausgerichtet wird. Nun wird der Klebstoff ausgehärtet indem die die Aushärtung initiierende Strahlung seitlich in das transparente Element 3 eingekoppelt wird.

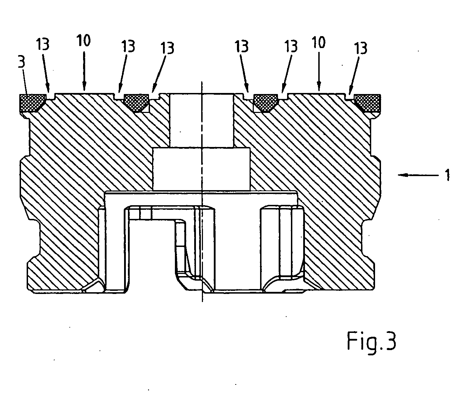

Fig. 3 zeigt einen Längsschnitt durch die Palette 1 sowie das daran festgeklebte transparente Element 3. Aus dieser Darstellung ist insbesondere ersichtlich, dass zwischen den Erhebungen 10 der Palette 1 und den Durchbrüchen im transparenten Element 3 nutenförmige Aussparungen 13 gebildet sind, welche den jeweiligen Durchbruch 9 umgeben und der Aufnahme von überschüssigem Klebstoff dienen. Solche Aussparungen können ggf. auch auf der Unterseite des transparenten Elements 3 vorgesehen werden.

Das Vorsehen eines transparenten Elements in der vorgeschlagenen Art hat den Vorteil, dass nichttransparente Teile flächig mittels eines unter Strahlung aushärtenden Klebstoffs miteinander verbunden werden können, wobei die in das transparente Element eingekoppelte Strahlung zumindest teilweise in Richtung des aufgetragenen Klebstoffs umgelenkt oder gestreut werden muss.

Jedenfalls kann die die Aushärtung bewirkende oder initiierende Strahlung mittels des transparenten Elements an Stellen gelenkt werden, welche ansonsten nicht mit Licht beaufschlagt werden könnten.

Anstelle des vorgängig beschriebenen stufenweisen Vorgehens, bei dem zuerst das transparente Element 3 mit der Palette 1 und danach der Stempel 2 mit dem transparenten Element 3 verklebt wird, könnte die Palette 1 sowie der Stempel 2 auch gleichzeitig mit dem transparenten Element 3 verklebt werden. Dazu müssten die genannten drei Teile -Palette 1, transparentes Element 3 und Stempel 2- unter Aufbringen der entsprechenden Klebstoffschichten zusammengefügt und der Stempel 2 in Bezug auf die Palette 1 ausgerichtet werden. Danach könnte die beiden Klebstoffschichten, namentlich die Klebstoffschicht zwischen Palette 1 und transparentem Element 3 sowie die Klebstoffschicht zwischen transparentem Element 3 und Stempel 2, gleichzeitig ausgehärtet werden, indem das sie Aushärtung initiierende Licht in das transparente Element 3 eingekoppelt wird. In diesem Fall muss lediglich sichergestellt werden, dass das seitlich in das transparente Element 3 eingekoppelte Licht auf beide Seiten, d.h. in Richtung der Palette 1 wie auch in Richtung des Stempels 2 umgelenkt bzw. gestreut würde.

Wenn im Zusammenhang mit dem transparenten Element jeweils von transparent oder Transparenz gesprochen wird, so ist darunter zu verstehen, dass das jeweilige Element für das die Aushärtung des Klebstoffs initiierende Licht zumindest teilweise durchlässig ist, so dass die in das transparente Element eingekoppelte Strahlung über dieses Element der jeweiligen Klebstoffschicht zugeführt werden kann. Unter nichttransparenten Teilen sind im vorliegenden Fall Teile zu verstehen, welche für das die Aushärtung des Klebstoffs initiierende Licht Strahlung nicht so transparent sind, dass das Licht flächig in die aufgebrachte Klebstoffschicht eingeleitet werden kann. Keinsfalls sind darunter nur Teile zu verstehen, die für Licht absolut undurchlässig sind.

Um die seitlich in das transparente Element eingekoppelte Strahlung in Richtung des aufgetragenen Klebstoffs umzulenken, sind mehrere Möglichkeiten vorhanden. Einerseits kann dies durch die Wahl des Materials des transparenten Elements beeinflusst werden. Ein andere Variante besteht darin, Umlenkflächen wie vorgängig beschrieben an zumindest einem der beiden miteinander zu verbindenden Teile vorzusehen.

Im Gegensatz zu herkömmlichen Systemen, welche das mechanische Befestigen des Stempels an der Palette vorsehen, hat das erfindungsgemässe System wesentliche Vorteile, indem das Fixieren des Stempels an einer Palette sehr schnell und sehr präzise vonstatten gehen kann. Im Gegensatz zu einer mechanischen Fixierung kann durch das Verkleben die Befestigung des Stempels praktisch kraftfrei erfolgen, so dass dieser schnell und mit einer hohen absoluten Genauigkeit an der Palette befestigt wird. Durch ein solches Palettieren des Stempels kann dieser im Bedarfsfall einfach und schnell ausgetauscht bzw. positionsgenau in einer Presse festgelegt werden.

## Patentansprüche

1. System zum Verbinden von nichttransparenten Teilen (1, 2) mittels eines durch elektromagnetische Strahlung aushärtbaren Klebstoffs, **dadurch gekennzeichnet, dass** das System zumindest ein zumindest teilweise transparentes Element (3) umfasst, welches derart zwischen die miteinander zu verbindenden Teile (1, 2) einfügbar ist, dass eine in das Element (3) eingekoppelte elektromagnetische Strahlung die Aushärtung einer auf das Element (3) und/oder ein nichttransparentes Teil (1, 2) aufgebrachten Klebstoffschicht initiiert.

2. System nach Anspruch 1, **dadurch gekennzeichnet, dass** das zumindest teilweise transparente Element (3) scheibenförmig ausgebildet ist und der Klebstoff flächig darauf aufgebracht ist.

3. System nach Anspruch 2, **dadurch gekennzeichnet, dass** das zumindest teilweise transparente Element (3) zwei planparallele Oberflächen aufweist, welche mit je einem nichttransparenten Teil (1, 2) verklebt sind.

4. System nach Anspruch 2 oder 3, **dadurch gekennzeichnet, dass** das zumindest teilweise transparente Element (3) aus einem Material gefertigt ist, welches zumindest einen Teil einer seitlich in das Element eingeleiteten Strahlung in Richtung einer auf das Element (3) und/oder und/oder ein nichttransparentes Teil (1, 2) aufgebrachten Klebstoffsschicht umlenkt oder streut.

5. System nach einem der vorhergehenden Ansprüche, **dadurch gekennzeichnet, dass** das zumindest teilweise transparente Element (3) aus Glas oder Kunststoff, insbesondere Polycarbonat oder Polymethylmetacrylat, gefertigt ist.

6. System nach einem der vorhergehenden Ansprüche, **dadurch gekennzeichnet, dass** das zumindest teilweise transparente Element (3) mit Öffnungen, Ausnehmungen oder Durchbrüchen (9) versehen ist.

7. System nach einem der Ansprüche 1 bis 5, **dadurch gekennzeichnet, dass** zumindest eines der miteinander zu verbindenden Teile (1) Erhebungen (10) aufweist und das zumindest teilweise transparente Element (3) mit zu den Erhebungen (10) korrespondierend angeordneten Durchbrüchen (9) versehen ist, in welche sich die. Erhebungen (10) im verbundenen Zustand der Teile (1, 2) erstrecken.

8. System nach Anspruch 7, **dadurch gekennzeichnet, dass** die Erhebungen (10) an einem von zwei miteinander zu verbindenden Teilen (1) angeordnet sind, wobei die Erhebungen (10) höher sind als das zumindest teilweise transparente Element (3) und als Auflage oder Anschlag für das andere nichttransparente Teil (2) dienen.

9. System nach Anspruch 7 oder 8, **dadurch gekennzeichnet, dass** die Erhebungen (10) seitlich angeordnete Flächen (11) aufweisen, welche derart ausgebildet sind, dass sie zumindest einen Teil einer in das zumindest teilweise transparente Element (3) eingekoppelten Strahlung in Richtung einer flächig auf das Element und/oder ein nichttransparentes Teil (1, 2) aufgebrachten Klebstoffsschicht umlenken oder streuen.

10. System nach einem der Ansprüche 7 bis 9, **dadurch gekennzeichnet, dass** das zumindest teilweise transparente Element (3) und/oder ein nichttransparentes Teil (1, 2) mit Aussparungen (13) versehen ist, welche zur Aufnahme von überschüssigem Klebstoff ausgebildet sind.

11. System nach einem der vorhergehenden Ansprüche, **dadurch gekennzeichnet, dass** das System zumindest eine Bestrahlungsquelle (7) umfasst, mittels welcher die die Aushärtung des Klebstoffs initiierende Strahlung in das zumindest teilweise transparente Element (3) einkoppelbar ist.

12. System nach Anspruch 11, **dadurch gekennzeichnet, dass** die Bestrahlungsquelle (7) eine Vielzahl von Leuchtdioden umfasst.

13. System nach einem der vorhergehenden Ansprüche, **dadurch gekennzeichnet, dass** das System Mittel (4, 4a) zum Ausrichten des einen nichttransparenten Teils (2) gegenüber dem anderen nichttransparenten Teil (1) umfasst.

14. System nach einem der vorhergehenden Ansprüche, **dadurch gekennzeichnet, dass** eines der nichttransparenten Teile eine an einem Spannfutter (6) festlegbare Palette (1) ist.

15. System nach einem der vorhergehenden Ansprüche, **dadurch gekennzeichnet, dass** eines der nichttransparenten Teile ein Werkzeug (2) oder Werkstück ist.

16. Verfahren zum Verbinden von nichttransparenten Teilen (1, 2) mittels eines durch Bestrahlung aushärtbaren Klebstoffs, **dadurch gekennzeichnet, dass** zwischen die beiden miteinander zu verbindenden Teile (1, 2) zumindest ein zumindest teilweise transparentes Element (3) eingefügt und die Aushärtung einer zum Verbinden der Teile (1, 2) aufgebrachten Klebstoffsschicht initiiert wird, indem die die Aushärtung initiierende Strahlung in das transparente Element (3) eingekoppelt wird.

17. Verfahren nach Anspruch 16, **dadurch gekennzeichnet, dass** eine Klebstoffschicht auf das zumindest teilweise transparente Element (3) und/oder ein damit zu verbindendes nichttransparentes Teil (1, 2) aufgebracht wird, und dass danach die Klebstoffschicht ausgehärtet wird, indem die die Aushärtung des Klebstoffs initiierende Strahlung über das transparente Elemente (3) in die Klebstoffschicht eingeleitet wird.

18. Verfahren nach Anspruch 16 oder 17, **dadurch gekennzeichnet, dass** das zumindest teilweise transparente Element (3) zuerst mit einem ersten nichttransparenten Teil (1) verklebt wird, und dass danach eine Klebstoffschicht auf ein zweites nichttransparentes Teil (2) und/oder das zumindest teilweise transparente Element (3) aufgebracht wird und die Aushärtung der Klebstoffschicht durch Einkoppeln einer elektromagnetischen Strahlung in das zumindest teilweise transparente Elemente (3) initiiert wird.

19. Verfahren nach einem der Ansprüche 16 bis 18, **dadurch gekennzeichnet, dass** die miteinander zu verbindenden nichttransparenten Teile (1, 2) vor dem Einkoppeln der die Aushärtung des Klebstoffs initiierenden Strahlung positionsgenau zueinander ausgerichtet werden.

20. Verfahren nach einem der Ansprüche 16 bis 19, **dadurch gekennzeichnet, dass** das zumindest teilweise transparente Element (3) über eine erste Klebstoffschicht mit einem ersten nichttransparenten Teil (1) und über eine zweite Klebstoffschicht mit einem zweiten nichttransparenten Teil (2) verbunden wird, wobei zumindest die eine der beiden Klebstoffschichten erst dann über das zumindest teilweise transparente Element (3) mit Strahlung beaufschlagt wird, wenn die beiden miteinander zu verbindenden Teile (1, 2) positionsgenau zueinander ausgerichtet sind.

21. Verwendung des Systems nach einem der Ansprüche 1 bis 15 zum positionsgenauen Fixieren eines Werkzeugs (2) oder Werkstücks an einer Palette (1), die an einer Spannvorrichtung festlegbar ist.

## Claims

1. A system for joining non-transparent parts (1, 2) by means of an electromagnetic radiation-curable adhesive, **characterized in that** the system comprises at least one, at least partly transparent member (3) insertable between the parts (1, 2) to be joined together such that electromagnetic radiation beamed into the transparent member (3) initiates curing of a film of adhesive applied to the transparent member (3) and/or to a non-transparent part (1,2).

2. The system as set forth in claim 1, **characterized in that** the at least partly transparent member (3) is configured disk-shaped and the adhesive is applied thereon planar.

3. The system as set forth in claim 2, **characterized in that** the at least partly transparent member (3) comprises two flat parallel surfaces each bonded to a non-transparent part (1, 2).

4. The system as set forth in claim 2 or 3, **characterized in that** the at least partly transparent member (3) is made of a material which deflects or scatters at least part of the radiation introduced sideways into the member in the direction of a film of adhesive applied to the transparent member (3) and/or to a non-transparent part (1, 2).

5. The system as set forth in any of the preceding claims, **characterized in that** the at least partly transparent member (3) is made of glass or plastics, particularly polycarbonate or polymethylmetacrylate.

6. The system as set forth in any of the preceding claims, **characterized in that** the at least partly transparent member (3) is provided with openings, recesses or through-holes.

7. The system as set forth in any of the claims 1 to 5, **characterized in that** at least one of the parts (1) to be joined together comprises protuberances (10) and the at least partly transparent member (3) is provided with through-holes (9) arranged to correspond with the protuberances (10) by locating the protuberances (10) in the joined condition of the parts (1, 2).

8. The system as set forth in claim 7, **characterized in that** the protuberances (10) are arranged on one of the two parts (1) to be joined together, the protuberances (10) being higher that the at least partly transparent member (3) and serving as a mount or stopper for the other non-transparent part (2).

9. The system as set forth in claim 7 or 8, **characterized in that** the protuberances (10) are footed by slanted faces (11) configured such that they deflect or scatter at least part of a radiation beamed into the at least partly transparent member (3) in the direction of a planar film of adhesive applied to the member and/or a non-transparent part (1, 2).

10. The system as set forth in any of the claims 7 to 9, **characterized in that** the at least partly transparent member (3) and/or a non-transparent part (1, 2) is/are provided with recesses (13) configured to receive excess adhesive.

11. The system as set forth in any of the preceding claims, **characterized in that** the system comprises at least one source of radiation (7), by means of which the radiation initiating curing of the adhesive is beamable into the at least partly transparent member (3).

12. The system as set forth in claim 11, **characterized in that** the source of radiation (7) comprises a plurality of light-emitting diodes.

13. The system as set forth in any of the preceding claims, **characterized in that** the system comprises means (4, 4a) for aligning the one non-transparent part (2) in relation to the other non-transparent part (1).

14. The system as set forth in any of the preceding claims, **characterized in that** one of the non-transparent parts is a pallet (1) definable on a chuck (6).

15. The system as set forth in any of the preceding claims, **characterized in that** one of the non-transparent parts is a tool (2) or workpiece.

16. A method of joining non-transparent parts (1, 2) by means of a radiation-curable adhesive, **characterized by** inserting between the two parts (1, 2) to be joined together at least one, at least partly transparent member (3) and initiating curing a film of adhesive applied to join the parts (1, 2) by beaming the radiation initiating curing into the film of adhesive.

17. The method as set forth in claim 16, **characterized in that** a film of adhesive is applied to the at least partly transparent member (3) and/or a non-transparent part to be joined thereto, after which the film of adhesive is cured by beaming the radiation initiating curing of the adhesive into the film of adhesive via the transparent member (3).

18. The method as set forth in claim 16 or 17, **characterized in that** the at least partly transparent member (3) is firstly bonded to a first non-transparent part, after which a film of adhesive is applied to a second non-transparent part and/or to the at least partly transparent member (3) and curing the film of adhesive is initiated by beaming electromagnetic radiation into the at least partly transparent member (3).

19. The method as set forth in any of the claims 16 to 18, **characterized in that** the non-transparent parts (1, 2) to be joined together are located precisely positioned to each other before beaming in the radiation initiating curing of the adhesive.

20. The method as set forth in any of the claims 16 to 19, **characterized in that** the at least partly transparent member (3) is joined by a first film of adhesive to a first non-transparent part (1) and by a second film of adhesive to a second non-transparent part (2), at least the one of the two films of adhesive being beamed with radiation via the at least partly transparent member (3) when the two parts to be joined together are located precisely positioned in relation to each other.

21. Use of the system as set forth in any of the claims 1 to 15 for fixating a tool (2) or workpiece precisely positioned to a pallet (1) definable in a chuck.

## Revendications

1. Système de liaison des pièces non transparentes (1, 2) à l'aide d'une colle durcissable par rayonnement électromagnétique, **caractérisé en ce que** le système englobe au moins un élément du moins partiellement transparent (3), lequel peut être inséré de telle sorte entre les pièces (1, 2) à assembler, qu'un rayonnement électromagnétique injecté dans l'élément (3) initie le durcissement de la couche de colle appliquée sur l'élément (3) et/ou une pièce non transparente (1, 2).

2. Système selon la revendication 1, **caractérisé en ce que** l'élément du moins partiellement transparent (3) est en forme de rondelle et que la colle est appliquée en surface sur celui-ci.

3. Système selon la revendication 2, **caractérisé en ce que** l'élément du moins partiellement transparent (3) présente deux surfaces plan-parallèles, lesquelles sont chacune collées avec une pièce non transparente (1).

4. Système selon la revendication 2 ou 3, **caractérisé en ce que** l'élément du moins partiellement transparent (3) est fabriqué en un matériau qui dévie ou diffuse au moins une partie d'un rayon introduit latéralement dans l'élément en direction d'une couche de colle appliquée sur l'élément (3) et/ou une pièce non transparente (1, 2).

5. Système selon l'une des revendications précédentes, **caractérisé en ce que** l'élément du moins partiellement transparent (3) est fabriqué en verre ou en plastique, en particulier en polycarbonate ou en polyméthylméthacrylate.

6. Système selon l'une des revendications précédentes, **caractérisé en ce que** l'élément du moins partiellement transparent (3) est pourvu d'ouvertures, d'exclusions ou de perforations (9).

7. Système selon l'une des revendications 1 à 5, **caractérisé en ce qu'**au moins une des pièces (1) à assembler présente des éminences (10) et que l'élément du moins partiellement transparent (3) est pourvu de perforations (9) disposées de façon correspondante avec les éminences (10), dans lesquelles les éminences (10) s'introduisent lorsque les pièces (1, 2) sont assemblées.

8. Système selon la revendication 7, **caractérisé en ce que** les éminences (10) sont disposées sur l'une des deux pièces (1) à assembler, sachant que les éminences (10) sont plus hautes que l'élément du moins partiellement transparent (3) et serve de support ou de butée pour l'autre pièce non transparente (2).

9. Système selon la revendication 7 ou 8, **caractérisé en ce que** les éminences (10) présentent des surfaces (11) disposées latéralement, lesquelles sont telles qu'elles dévient ou diffusent au moins une partie d'un rayon, injecté dans l'élément du moins partiellement transparent (3), en direction d'une couche de colle appliquée sur la surface de l'élément et/ou d'une pièce non transparente (1, 2).

10. Système selon l'une des revendications 7 à 9, **caractérisé en ce que** l'élément du moins partiellement transparent (3) et/ou une pièce non transparente (1, 2) sont pourvus d'évidements (13), lesquels sont conçus pour recevoir l'excédent de colle.

11. Système selon l'une des revendications précédentes, **caractérisé en ce que** le système comporte au moins une source de rayonnement, à l'aide de laquelle le rayonnement initiant le durcissement de la colle dans l'élément du moins partiellement transparent (3) est injecté.

12. Système selon la revendication 11, **caractérisé en ce que** la source de rayonnement (7) comporte plusieurs diodes luminescentes.

13. Système selon l'une des revendications précédentes, **caractérisé en ce que** le système comporte des dispositifs (4, 4a) permettant de positionner la pièce non transparente (2) par rapport à l'autre pièce non transparente (1).

14. Système selon l'une des revendications précédentes, **caractérisé en ce que** l'une des pièces non transparentes est une palette (1) pouvant être fixée sur un mandrin de serrage (6).

15. Système selon l'une des revendications précédentes, **caractérisé en ce que** l'une des pièces non transparentes est un outil (2) ou une pièce à usiner.

16. Procédé d'assemblage de pièces non transparentes (1, 2) à l'aide d'une colle durcissable par rayonnement, **caractérisé en ce qu'**entre les deux pièces (1, 2) à assembler, est inséré au moins un élément du moins partiellement transparent (3) et **en ce que** le durcissement d'une couche de colle appliquée pour assembler les pièces (1, 2) est initié par l'injection d'un rayon initiant le durcissement dans l'élément transparent (3).

17. Procédé selon la revendication 16, **caractérisé en ce qu'**une couche de colle est appliquée sur l'élément du moins partiellement transparent (3) et/ou une pièce non transparente (1, 2) à assembler avec ce dernier, et **en ce qu'**ensuite, la couche de colle est durcie par l'introduction du rayon initiant le durcissement de la colle par l'élément transparent (3) dans la couche de colle.

18. Procédé selon la revendication 16 ou 17, **caractérisé en ce que** l'élément du moins partiellement transparent (3) est d'abord collé avec une pièce non transparente (1) et **en ce qu'**ensuite, une couche de colle est appliquée sur une seconde pièce non transparente (2) et/ou l'élément du moins partiellement transparent (3) et que le durcissement de la couche de colle est initié par l'injection d'un rayon électromagnétique dans l'élément du moins partiellement transparent (3).

19. Procédé selon l'une des revendications 16 à 18, **caractérisé en ce que** les pièces non transparentes (1, 2) devant être assemblées sont précisément positionnées l'une par rapport à l'autre avant l'injection du rayon initiant le durcissement de la colle.

20. Procédé selon l'une des revendications 16 à 19, **caractérisé en ce que** l'élément du moins partiellement transparent (3) est assemblé à une première pièce non transparente (1) à l'aide d'une première couche de colle et est assemblé à une seconde pièce non transparente (2) à l'aide d'une seconde couche de colle, sachant qu'au moins l'une des deux couches n'est irradiée par l'élément du moins partiellement transparent (3) que lorsque les deux pièces (1, 2) à assembler sont parfaitement positionnées l'une par rapport à l'autre.

21. Application du système selon l'une des revendications 1 à 15 pour la fixation dans la position exacte d'un outil (2) ou d'une pièce à usiner sur une palette (1) pouvant être fixée sur un dispositif de serrage.
